(19) Europäisches Patentamt
European Patent Office
Office européen des brevets

(11) Publication number: **0 143 793**
**B1**

(12) **EUROPEAN PATENT SPECIFICATION**

(45) Date of publication of patent specification: **27.01.88**

(21) Application number: **84901093.9**

(22) Date of filing: **08.03.84**

(88) International application number: **PCT/HU84/00014**

(87) International publication number: **WO 84/03418 13.09.84 Gazette 84/22**

(51) Int. Cl.$^4$: **A 01 N 31/08**, A 01 N 31/14, A 01 N 43/16, A 01 N 55/02, A 01 N 55/08, A 01 N 57/20, C 05 G 3/00, C 05 F 11/10

# (54) PROCESS AND COMPOSITION FOR PLANT GROWTH REGULATION.

(30) Priority: **08.03.83 HU 79883**
**24.02.84 HU 361184**

(43) Date of publication of application: **12.06.85 Bulletin 85/24**

(45) Publication of the grant of the patent: **27.01.88 Bulletin 88/04**

(84) Designated Contracting States: **AT CH DE FR GB LI NL SE**

(56) References cited:
**FR-A-2 322 544**
**FR-A-2 460 111**
**US-A-3 674 458**

(73) Proprietor: **NITROKEMIA IPARTELEPEK**
**Pf. 45**
**H-8184 Füzfögyártelep (HU)**

(72) Inventor: **KARSAI, József**
**24, Ország u.**
**H-2481 Velence (HU)**
Inventor: **SEBESTYEN, Endre**
**40, Lenin ut**
**H-2484 Agárd (HU)**
Inventor: **GARDI, Iván**
**5, Sramli u.**
**H-1039 Budapest (HU)**
Inventor: **KIS, György**
**26/a, Damjanich u.**
**H-1071 Budapest (HU)**
Inventor: **PAPP, András**
**56, Bókay . ut**
**H-1181 Budapest (HU)**
Inventor: **BALINT, Sándor**
**7, Stromfeld u.**
**H-8200 Veszprém (HU)**
Inventor: **BENCZIK, Judit née P SZTOR**
**10, Peto "fi u.**
**H-8220 Balatonalmádi (HU)**
Inventor: **KOLONICS, Zoltán**
**61, Bajcsy Zs. u.**
**H-8220 Balatonalmádi (HU)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

**EP 0 143 793 B1**

Courier Press, Leamington Spa, England.

(72) Inventor: TÖMÖRDI, Elemér
Botev utca 4/b
H-8200 Veszprém (HU)
Inventor: GAAL, Sándor
1/b, Kinizsi ut
H-2315 Szigethalom (HU)

(74) Representative: von Füner, Alexander, Dr. et al
Patentanwälte v. Füner, Ebbinghaus, Finck
Mariahilfplatz 2 & 3
D-8000 München 90 (DE)

**Description**

The present invention concerns a process and a composition for regulating the growth of field plants by combined treatment.

Background of the Invention

Synthetic compounds, first of all beta-3-indolyl-3-acetic acid and derivatives thereof having auxin activity are known to act through the leaves or root of the plant. These compounds can be used as plant growth regulators but their effectivity is relatively low as the auxin type compounds are rapidly decomposed in the plant cells by peroxydase type enzymes.

Another group of the compositions stimulating the inner synthesis of auxins/auxin-inductors/ is formed by 2-chloroethyl phosphonic acid and derivatives thereof. According to FR—PS 2 322 544 these compounds among others show auxin activity, /increase plant growth/, influence seed germination, etc. When using 2-chloroethyl phosphonic acid the releasing ethylene induces the inner auxin synthesis. By the increased plant hormone level the synthesis of enzymes controlling physiological processes is also enhanced e.g. the activity of decomposing enzymes/peroxydases/. Due to this effect the required amount of 2-chloroethyl phosphonic acid is higher per hectare and if the treatment is not carried out in a suitable growth stage of the plants then depression, withering and necrotic symptoms may occur.

Disclosure of the invention

The present invention is directed to regulating the growth of monocotyledonous and dicotyledonous field plants, suitable compositions for controlling plant growth without harmful side effects.

According to the present invention the growth of the field plants is controlled by treating the plants in the vegetative stage with 4-chloro-meta-cresol, p-cresol, hydroquinone, p-nitrophenol, p-chlorophenol, phenol, resorcinol, pyrogallol, 2,4-dichlorophenol, 2,6-dichlorophenol, pyracatechol, o-butylphenol, 4-methyl-7-hydroxy-/2H/benzopyran-2-one, diacetylpyrocatechol, pyrocatechol-metallyl-ether, 2,2,4-trimethyl-5-hydroxy-/2,H-chromene, 2,2,4-trimethyl-7-hydroxy-/2,H/-chromene or a mixture thereof at an application rate of 0.3—4 kg/ha and optionally a mixture containing boron, magnesium, sulphur in the form of water-soluble derivatives, manganese, copper, zinc and molybdenum in the form of water soluble salts and metal chelates respectively, or urea or ammonium salts, at an application rate of 0.5—5.0 liter/ha at a concentration of 5—500 g/liter and simultaneously or previously with 2-choroethyl phosphonic acid or esters or salts thereof at an application rate of 0.5—3.0 kg/ha.

As a result of the treatment with higher doses both for monocotyledonous and dicotyledonous field plants a depression of growth occurs, by decreasing the dosis the growth can be increased or the fruit yield can be increased.

The invention provides compositions for regulating the growth of plants, which contain 1 to 60% by weight of 4-chloro-metacresol, p-cresol, hydroquinone, p-nitrophenol, p-chlorophenol, phenol, resorcinol, pyrogallol, 2,34-dichlorophenol, 2,6-dichlorophenol, pyrocatechol, o-butylphenol, 4-methyl-7-hydroxy-/2H/ benzopyran-2-one, pyrocatechol-metallyl-ether, 2,2,4-trimethyl-5-hydroxy-/2,H/-chromene, 2,2,4-trimethyl-7-hydroxy-/2,H/-chromene, and optionally boron, magnesium, sulphur in the form of water-soluble derivatives, manganese, copper, zinc, molybdenum, said metals being in the form of water soluble salts or soluble chelates, further urea or ammonium salts and 2-chloroethyl phosphonic acid, salts or esters thereof together with solid or liquid carriers, optionally surfactants.

The compositions are preferably used in the form of tank mixtures in diluted state and if desired the active ingredients are combined prior to use in the tank mixture.

The compositions according to the invention contain known components. The used compounds and their physical constants are as follows:

I. 4-chloro-meta-cresol, m.p.: 56°C, b.p.: 235°C
II. p-cresol m.p.: 36°C, b.p.: 202°C
III. hydroquinone m.p.: 172°C, b.p.: 285°C
IV. p-nitrophenol m.p.: 113°C, b.p.: 279°C
V. p-chlorophenol m.p.: 43°C, b.p.: 220°C
VI. phenol, m.p.: 35—41°C
VII. resorcinol m.p.: 110°C, b.p.: 280°C
VIII. pyrogallol m.p.: 133°C, b.p.: 309°C
IX. 2,4-dichlorophenol m.p.: 42°C, b.p.: 209°C
X. 2,6-dichlorophenol m.p.: 65°C, b.p.: 218°C
XI. pyrocatechol m.p. 104°C, b.p.: 245°C
XII. o-butylphenol b.p.: 234°C

XIII. 4-methyl-7-hydroxy-/2H/benzopyran-2-one m.p: 185°C /4-methyl-umbelliferon, 7-hydroxy-4-methyl-coumarin/

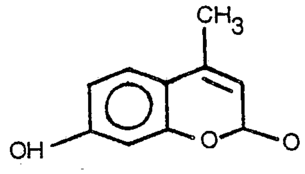

XV. diacetyl pyrocatechol m.p.: 64°C

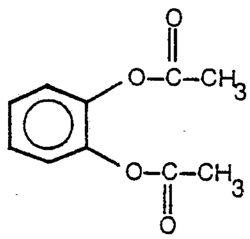

XVI. pyrocatechol-metallyl-ether

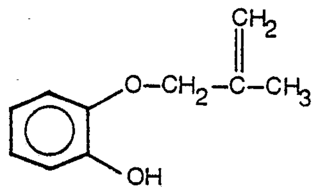

XVII. 2,2,4-trimethyl-5-hydroxy-2,H-chromene

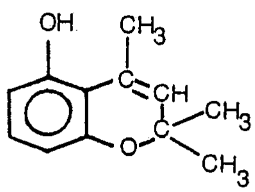

XVIII. 2,2,4-trimethyl-7-hydroxy-/2,H/-chromene

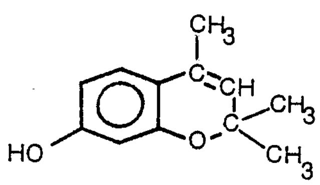

2-chloroethyl phosphonic acid is disclosed in FR—PS 2 322 544. It is used in aqueous solutions of a concentration of 10—5000 ppm, preferably 10—1000 ppm.

Compounds I—XVIII used according to the invention are applied in the form of dusting agents, wettable powders or emulsifiable concentrates, which can contain solid or liquid carriers and/or surfactants.

Among solid carriers kaolin, bentonite, silicic acid, dolomite, calcium carbonate, talc, and among liquid carriers aliphatic, aromatic, cycloaromatic solvents, mineral oil fractions and alcohols can be mentioned. Surfactants can be non-ionic and anionic, as anionic surfactants salts of aliphatic sulfonic acid esters, salts of aromatic sulfonated compounds, alkali salts of lignosulfonate and as non-ionic surfactants fatty alcohol derivatives of ethylene oxide or propylene oxide, alkyl phenols, oils or fats can be employed. The compositions in concentrated form are diluted prior to use to 0.01—5% sprayable compositions. The dosis of the compositions is 0.5—5 kg per hectare, but higher doses may be used as well for special purposes.

As monocotyledonous plants the crops, corn and as dicotyledonous plants, sunflower, cole-seed, sugar beet, soya are mentioned.

We have found that the compounds I—XVIII together with 2-chloroethyl phosphonic acid show excellent plant growth regulating activity, if the microelements and mesoelements required for these processes are present, which upon penetrating into the plant form biologically active complex with the

enzyme protein, thus the hormone and enzyme level of the plant can be brought into equilibrium and the depression accompanying the use of plant growth regulators can be eliminated in case of proper use.

Micro- and mesoelements are generally used in the form of chelates. As chelate forming agent K-p-phenol-lignosulfonate can be used. As chelates magnesium chelate at a concentration of 40 g/l, manganese chelate at a concentration of 30 g/l, copper chelate at a concentration of 40 g/l, zinc chelate at a concentration of 30 g/l can be mentioned. Sulphur /in the form of a sulphate/ can be added in ammonium sulphate solution of a concentration of 300 g/l, and molybdenum in ammonium molybdenate solution of a concentration of 3 g/l.

Modes of embodiment of the invention

Emulsifiable concentrates, wettable powder mixtures and dusting agents can be prepared as disclosed in the following Examples:

Example 1

A mixture of 25 g of 4-methyl-7-hydroxy/2H/benzopyran-2-one and 25 g of 2-chloroethyl phosphonic acid is dissolved in 30 g of xylene. 10 g of an adduct prepared from 8 to 10 moles of ethylene oxide and 1 mole of oleic acid-N-monoethanol-amide, 5 g of calcium salt of dodecyl benzene sulfonic acid, 5 g of an adduct prepared from 40 moles of ethylene oxide and 1 mole castor oil are added. The obtained solution is dispersed in 1150 g of water and the aqueous composition contains 2% by weight of the active ingredients. To this composition chelates of the microelements and soluble salts of the mesoelements and if desired further excipients and nutrients can be added.

Example 2

In order to prepare a dusting agent 25 g 4-chloro-meta-cresol and 25 g of 2-chloroethyl phosphonic acid are admixed with 3 g of diisobutyl-naphtalene-sulphonic acid sodium salt, 5 g sodium salt of ligninsulphonic acid and 42 g of kaolin. The mixture is homogenised and ground.

As surfactant an adduct of 40 moles of ethylene oxide and 1 mole of nonyl phenol, a condensate of sodium salt of naphtalene-sulfonic acid and formaldehyde of a molar ratio 2:1, an adduct of 20 moles of ethylene oxide, or 20 moles of propylene oxide with 1 mole nonyl phenol and calcium salt of ligninsulphonic acid can be used.

Example 3

A mixture of 25 g of pyrocatechol diacetate and 25 g of 2-chloroethyl phosphonic acid is dissolved in a mixture of 20 g xylene and 15 g of methyl ethyl ketone. 10 g of an adduct prepared of 20 moles of propylene oxide and 1 mole of castor oil as well as 5 g of calcium salt of dodecyl benzene sulfonic acid are added. The composition is diluted with water prior to use to the desired concentration.

Example 4

A mixture of 25 g of 2,6-dichloro-phenol and 25 g of 2-chloroethyl phosphonic acid is dissolved in a mixture of 25 g xylene and 10 g methyl ethyl ketone. 15 g of an adduct prepared from 40 moles of ethylene oxide and 1 mole of lauric acid are added. Prior to use the composition is diluted with water to the desired concentration.

Example 5

The biological activity of the process and composition according to the invention was examined on Chenopodium murale dicotyledonous plant/nettle leafed goosefoot/. Plants of same age and development stage were planted to plastic pots filled with green-house turf at 2—4 pairs leaf stage, to each pot two plants were planted. The plants were grown until 6—8 pairs leaf stage and then treated with the compositions according to the invention as follows:

625 ppm = 1 liter/ha
1250 ppm = 2 liter/ha
2500 ppm = 4 liter/ha
5000 ppm = 8 liter/ha
10000 ppm = 16 liter/ha

The emulsifiable concentrates contained 25% by weight of active ingredient.

The test was carried out in six dishes, and the six dishes were treated altogether with 25 ml of solution. The amount of active substance can be calculated on the basis of the ppm and liter/ha data. 1 liter contained 625, 1250 etc. ppm. Before spraying the height of each plant was measured. On the eighth day after the treatments the plant height was measured and the extent of the change of height per day was calculated. The results are shown in the following Table and expressed in $cm \cdot x\ day^{-1}$.

TABLE

| | 625 ppm = 1 l/ha | | 1250 ppm = 2 l/ha | | 2500 ppm = 4 l/ha | | 5000 ppm = 8 l/ha | | 10000 ppm = 16 l/ha | |
|---|---|---|---|---|---|---|---|---|---|---|
| Untreated control | 0.35 | 100.0 | | | | | | | | |
| I | 0.37 | 105.7 | 0.65 | 185.7 | 0.69 | 197.1 | 0.80 | 228.0 | 0.31 | 88.0 |
| II | 0.36 | 102.6 | 0.43 | 128.8 | 0.52 | 148.6 | 0.39 | 111.4 | 0.32 | 91.4 |
| III | 0.39 | 111.4 | 0.37 | 105.7 | 0.38 | 108.6 | 0.41 | 117.1 | 0.39 | 111.4 |
| IV | 0.58 | 165.7 | 0.43 | 122.8 | 0.71 | 202.9 | 0.44 | 125.7 | 0.19 | 54.3 |
| V | 0.39 | 111.4 | 0.34 | 97.1 | 0.29 | 52.9 | 0.35 | 100.0 | 0.40 | 114.3 |
| VI | 0.46 | 131.4 | 0.39 | 111.4 | 0.35 | 100.0 | 0.39 | 111.4 | 0.34 | 97.1 |
| VII | 0.39 | 111.4 | 0.60 | 171.4 | 0.24 | 68.6 | 0.10 | 38.6 | 0.15 | 42.5 |
| VIII | 0.33 | 94.3 | 0.45 | 128.6 | 0.37 | 109.7 | 0.50 | 142.9 | 0.57 | 163.1 |
| IX | 0.39 | 111.4 | 0.45 | 128.6 | 0.47 | 134.2 | 0.51 | 145.7 | 0.39 | 111.4 |
| X | 0.59 | 168.3 | 0.47 | 134.2 | 0.41 | 117.1 | 0.36 | 102.8 | 0.20 | 57.1 |
| XI | 0.43 | 122.8 | 0.38 | 108.6 | 0.43 | 122.8 | 0.52 | 148.6 | 0.40 | 114.1 |
| XII | 0.49 | 140.0 | 0.47 | 134.2 | 0.40 | 114.3 | 0.47 | 134.2 | 0.41 | 117.1 |
| XIII | 0.30 | 103.0 | 0.35 | 117.3 | 0.39 | 131.0 | 0.21 | 71.3 | 0.20 | 67.3 |
| XV | 0.29 | 98.7 | 0.20 | 66.7 | 0.12 | 42.7 | 0.14 | 47.7 | 0.10 | 34.3 |

The result of the Table show that growth rate of the test plants is differently influenced by the test compositions.

Compositions I, II, IV, VII, XIII. increased the rate of growth to a dosage of 4—8 l/ha.

Composition X. showed similar results but the rate of the growth increased the most at the lowest dosage /1 liter/ha/. By further increasing the dosage this value decreased.

Compositions III, V, VI. did not significantly influence the rate of growth. The increase of the growth rate of the plants treated with compositions VIII, IX, XI, XII. surpassed the rate of the control plants at each tested dosage.

The effect of compound XV. was different. At 1 l/ha the rate of growth was not changed but by increasing the amount per hectare the rate of growth was in each case lower than the control value.

Further test results show that compositions I—XV. according to the invention when combined with 2-chloroethyl-phosphonic acid decreased the daily growth rate /R = 2-chloroethyl phosphonic acid/

TABLE

| Treatments | Growth rate | | Growth rate R 0.5 l/ha + I—XV. 4 l/ha | | Growth rate R 1.0 l/ha + I—XV. 4 l/ha | |
|---|---|---|---|---|---|---|
| | cm × $day^{-1}$ | % | cm × $day^{-1}$ | % | cm × $day^{-1}$ | % |
| Untreated control | 0.35 | 100.0 | | | | |
| R 0.5 l/ha = 0,2 kg/ha | 0.28 | 80.0 | | | | |
| R 1.0 l/ha = 0,4 kg/ha | 0.15 | 42.9 | | | | |
| I. 4 l/ha = 2500 ppm | 0.69 | 197.1 | 0.32 | 91.4 | 0.21 | 60.0 |
| II. 4 l/ha = 2500 ppm | 0.52 | 148.6 | 0.29 | 82.9 | 0.19 | 54.3 |
| III. 4 l/ha = 2500 ppm | 0.38 | 108.6 | 0.15 | 42.9 | 0.15 | 42.9 |
| IV. 4 l/ha = 2500 ppm | 0.71 | 202.9 | 0.34 | 97.1 | 0.22 | 62.9 |
| V. 4 l/ha = 2500 ppm | 0.29 | 52.9 | 0.14 | 40.0 | 0.12 | 34.3 |
| VI. 4 l/ha = 2500 ppm | 0.35 | 100.0 | 0.24 | 68.6 | 0.14 | 40.0 |
| VII. 4 l/ha = 2500 ppm | 0.24 | 68.6 | 0.22 | 62.9 | 0.11 | 31.4 |
| VIII. 4 l/ha = 2500 ppm | 0.37 | 109.7 | 0.27 | 77.1 | 0.16 | 45.7 |
| IX. 4 l/ha = 2500 ppm | 0.47 | 134.2 | 0.30 | 85.7 | 0.18 | 51.4 |
| X. 4 l/ha = 2500 ppm | 0.41 | 117.1 | 0.28 | 80.0 | 0.16 | 45.7 |
| XI. 4 l/ha = 2500 ppm | 0.43 | 122.8 | 0.27 | 77.1 | 0.17 | 48.6 |
| XII. 4 l/ha = 2500 ppm | 0.40 | 114.3 | 0.25 | 71.4 | 0.17 | 48.6 |
| XIII. 4 l/ha = 2500 ppm | 0.39 | 111.4 | 0.26 | 74.3 | 0.15 | 42.8 |
| XV. 4 l/ha = 2500 ppm | 0.12 | 34.3 | 0.13 | 37.1 | 0.10 | 28.6 |

Upon combination compounds I—XV. with 0.5 and 1 liter/ha doses of composition R /2-chloroethyl phosphonic acid 40% concentrate/ the daily rate of growth decreased in each case.

When adding to a dosage of 4 l/ha of the compounds I—XV. composition R then the same tendencies could be observed as when testing compounds I—XV. alone. Differences were only in the absolute value of the growth rate.

When using the compositions according to the invention at lower doses and together with microelements then the daily growth rate is enhanced by the active ingredients, i.e. the growth stimulating effect occurs.

TABLE

| Treatments | Growth rate | |
|---|---|---|
| | cm × day$^{-1}$ | % |
| Untreated control | 0.35 | 100 |
| R 0.25 l/ha = 0.1 kg/ha | 0.30 | 85.7 |
| R 0.25 l/ha = 0.1 kg/ha + K | 0.33 | 94.3 |
| *I. 1 l/ha + R 0.25 l/ha + K | 0.41 | 117.1 |
| II. 1 l/ha + R 0.25 l/ha + K | 0.36 | 102.9 |
| III. 1 l/ha + R 0.25 l/ha + K | 0.34 | 97.1 |
| IV. 1 l/ha + R 0.25 l/ha + K | 0.38 | 108.6 |
| VI. 1 l/ha + R 0.25 l/ha + K | 0.33 | 94.1 |
| VI. 1 l/ha + R 0.25 l/ha + K | 0.36 | 102.9 |
| VII. 1 l/ha + R 0.25 l/ha + K | 0.42 | 120.0 |
| VIII. 1 l/ha + R 0.25 l/ha + K | 0.44 | 125.7 |
| IX. 1 l/ha + R 0.25 l/ha + K | 0.42 | 120.0 |
| X. 1 l/ha + R 0.25 l/ha + K | 0.44 | 125.7 |
| XI. 1 l/ha + R 0.25 l/ha + K | 0.45 | 128.6 |
| XII.1 l/ha + R 0.25 l/ha + K | 0.43 | 122.9 |
| XII. 1 l/ha + R 0.25 l/ha + K | 0.41 | 117.1 |
| XV. 1 l/ha + R 0.25 l/ha + K | 0.35 | 100.0 |

K = 40 g/l Cu + 30 g/l Zn + 40 g/l Mg + 7 g/l B in form of chelates formed with K-paraphenol-lignosulfonate
* = 625 ppm + 0.1 kg/ha + amount of trace elements as in the previous line

Example 6

Freeland experiments were carried out under the following conditions:
Plant: Jubilejnaja /winter wheat/
Sowing: October 5th
Harvest: July 12th
Weed-killing: Dikamin D /40%/ 2.8 l/ha 2.4—D—$NH_4$ salt
Chemical fertilizer:
N = 200 kg/ha
$P_2O_5$ = 120 kg/ha
$K_2O$ = 140 kg/ha
Stock-number: 6.2 million stock/ha
Plotland size: 20 m$^2$
Compositions: 25% emulsifiable concentrate containing compound I, IV and VIII as active ingredient 2-chloroethyl phosphonic acid in a 40% emulsifiable concentrate /R/ Cu- +Zn +Mg +B-chelates /K/ at a concentration of 40 g/l 30 g/l 40 g/l 7 g/l with K-paraphenol-lignosulfonate
Time of treatment: growing into bush or 2 nodes stage.

TABLE

Effect of compositions on Jubilejnaja 50 /winter/ wheat/ crop

| Treatment | Dosage l/ha | Crop t/ha | | | Average | % of control |
|---|---|---|---|---|---|---|
| | | I | II | III | | |
| Control | | 7.22 | 7.49 | 7.44 | 7.33 | 100.0 |
| /I/ | 1.5 = 0.375 kg/ha | 8.05 | 8.22 | 6.94 | 7.74 | 105.6 |
| | 3.0 = 0,75 kg/ha | 8.11 | 8.22 | 8.11 | 8.15 | 111.9 |
| /I/ + R + K | 1.5 + 1.0 + 2.0 = 0,375 + 0,4 kg/ha* | 8.05 | 8.66 | 7.94 | 8.22 | 112.1 |
| /I/ + R + K | 3.0 + 1.0 + 2.0 = 0,75 + 0,4 kg/ha** | 7.05 | 8.77 | 7.83 | 7.88 | 107.5 |
| /IV/ | 1.5 = 0,375 kg/ha | 7.55 | 7.66 | 7.28 | 7.10 | 102.3 |
| /IV/ | 3.0 = 0,75 kg/ha | 7.33 | 7.49 | 8.38 | 7.74 | 105.6 |
| /IV/ + R + K | 1.5 + 1.0 + 2.0 = 0,75 kg/ha | 6.99 | 8.16 | 7.88 | 7.68 | 104.7 |
| /IV/ + R + K | 3.0 + 1.0 + 2.0 = 0,75 kg/ha | 6.66 | 7.83 | 8.16 | 7.5 | 103.0 |
| /VIII/ | 1.5 = 0,75 kg/ha | 7.72 | 7.22 | 6.39 | 7.11 | 96.9 |
| /VIII/ | 3.0 = 0,75 kg/ha | 7.22 | 6.99 | 7.16 | 7.13 | 97.3 |
| /VIII/ + R + K | 1.5 + 1.0 + 2.0 = 0,75 kg/ha | 8.22 | 7.66 | 6.94 | 7.63 | 104.1 |
| /VIII/ + R + K | 3.0 + 1.0 + 2.0 = 0,75 kg/ha | 7.39 | 7.94 | 8.06 | 7.79 | 106.3 |

*double amount of elements as in the previous table
**double amount of trace elements

Example 7

Freeland plot experiments were carried out under the following conditions:
Plant: Marianne sunflower
Sowing: April 17th
Harvest: September 12th
Weed-killing: 3.5 l/ha Treflan + 2.5 kg/ha Maloran /50 WP/
Chemical fertilizer:
- N = 120 kg/ha
- $P_2O_5$ = 150 kg/ha
- $K_2O$ = 200 kg/ha

Stock-number: 57000 stock/ha
Plotsize: 20m$^2$
Soil: field cernozjom
Time of treatment: in 2—6 pairs leaf stage of the plants
Compositions: 2-chloroethyl-phosphonic acid /40 EC/ /R/
- Compound XIII /25 EC/
- Compound XV /25 EC/

The results are summarized in the following Table.

TABLE

Effect of the composition according to the invention on the crop of the sunflower /freeland plot experiment/

| Method of treatment | Dosage l/ha | Crop t/ha I | II | III | % |
|---|---|---|---|---|---|
| Control | | 3.82 | 3.67 | 3.74 | 100.0 |
| R | 1.0 = 0,4 kg/ha | 3.59 | 3.41 | 3.50 | 93.6 |
| R | 2.0 = 0,8 kg/ha | 2.78 | 2.97 | 2.88 | 76.9 |
| /XIII/ | 2.5 = 0,62 kg/ha | 3.83 | 4.07 | 3.95 | 105.6 |
| /XIII/ | 5.0 = 1,24 kg/ha | 3.34 | 3.41 | 3.38 | 90.2 |
| /XIII/ + R | 2.5 + 2.0 = 0,62 + 0,8 kg/ha | 3.10 | 3.08 | 3.09 | 82.6 |
| /XIII/ + R | 5.0 + 1.0 = 2,5 + 0,4 kg/ha | 4.47 | 4.18 | 4.32 | 115.5 |
| /XV/ | 2.5 = 0,62 kg/ha | 4.36 | 4.11 | 4.24 | 113.2 |
| /XV/ | 5.0 = 1,24 kg/ha | 3.39 | 3.58 | 3.49 | 93.2 |
| /XV/ + R | 2.5 + 2.0 = 0,62 + 0,8 kg/ha | 3.34 | 3.50 | 3.44 | 91.8 |
| /XV/ + R | 5.0 + 1.0 = 1,24 + 0,4 kg/ha | 3.76 | 3.84 | 3.80 | 101.6 |
| /XV/// | 2.5 = 0,62 kg/ha | 4.50 | 4.33 | 4.42 | 118.0 |
| /XVII/ | 5.0 = 1,24 kg/ha | 3.91 | 4.12 | 4.02 | 107.4 |
| /XVII/ + R | 2.5 + 2.0 = 0,62 + 0,8 kg/ha | 3.80 | 3.42 | 3.86 | 103.2 |
| /XVII/ + R | 5.0 + 1.0 = 1,24 + 0,4 kg/ha | 4.64 | 4.42 | 4.53 | 121.1 |

## Claims

1. Process for regulating the growth of field plants, which comprises treating the plants in vegetative stage at an application rate of 0.3—4.0 kg/ha with one or more compounds selected from 4-chloro-meta-cresol, p-cresol, hydroquinone, p-nitrophenol, p-chlorophenol, phenol, resorcinol, pyrogallol, 2,4-dichlorophenol, 2,6-dichlorophenol, pyrocatechol, o-butylphenol, 4-methyl-7-hydroxy-/2H/benzopyran-2-one or diacetylpyrocatechol, pyrocatechol-metallyl-ether, 2,2,4-trimethyl-5-hydroxy-/2H/-chromene, 2,2,4-trimethyl-7-hydroxy-/2,H/-chromene and optionally at a rate of 0.5—5.0 liter/ha with a mixture containing magnesium, manganese, copper, zinc or molybdenum in the form of water soluble metal chelates or salts, boron or sulphur in the form of water soluble derivatives or urea or an ammonium salt of a concentration of 5—500 g/l, furtheron with 0.5—3.0 kg/ha of 2-chloroethyl phosphonic acid, esters or salts thereof simultaneously or previously.

2. Plant growth regulating composition preferably for regulating the growth of field plants in the vegetative stage, which comprises 1 to 60% by weight of 4-chloro-meta-cresol, p-cresol, hydroquinone, p-nitrophenol, p-chlorophenol, phenol, resorcinol, pyrogallol, 2,4-dichlorophenol, 2,6-dichlorophenol, pyrocatechol, o-butylphenol, 4-methyl-7-hydroxy-/2,H/benzopyran-2-one, diacetylpyrocatechol, pyrocatechol-metallyl-ether, 2,2,4-trimethyl-5-hydroxy-/2H/-chromene, 2,2,4-trimethyl-7-hydroxy-/2,H/-chromene or a mixture thereof, and optionally water soluble salts or chelates of magnesium, manganese, copper, zinc or molybdenum or water soluble derivatives of boron or sulphur or urea or ammonium salt and 2-chloroethyl phosphonic acid, salts or esters thereof and solid or liquid carriers and/or surfactants.

## Patentansprüche

1. Verfahren zur Regulierung des Wachstums von Feldpflanzen, das darin besteht, daß man die Pflanzen im vegetativen Stadium bei einer Aufwandmenge von 0,3 bis 4,0 kg/ha mit einer oder mehreren

Verbindungen, ausgewählt aus der Gruppe 4-Chlor-m-cresol, p-Cresol, Hydrochinon, p-Nitrophenol, p-Chlorphenol, Phenol, Resorcin, Pyrogallol, 2,4-Dichlorphenol, 2,6-Dichlorphenol, Brenzkatechin, o-Butylphenol, 4-Methyl-7-hydroxy-(2H)benzpyran-2-on oder Diacetylbrenzkatechin, Brenzkatechin-metallyl-ether, 2,2,4-Trimethyl-5-hydroxy-(2,H)-chromen, 2,2,4-Trimethyl-7-hydroxy-(2,H)-chromen und gegebenenfalls bei einer Aufwandmenge von 0,5 bis 5,0 l/ha mit einem Gemisch, das Magnesium, Mangan, Kupfer, Zink oder Molybdän in Form wasserlöslicher Metallchelate oder -salze, Bor oder Schwefel in Form wasserlöslicher Harnstoffderivate oder ein Ammoniumsalz in einer Konzentration von 5 bis 500 g/l enthält, und ferner mit 0,5 bis 3,0 kg/ha 2-Chlorethylphosphonsäure, Estern oder Salzen davon gleichzeitig oder vorgängig behandelt.

2. Gemisch zur Regulierung des Pflanzenwachstums, insbesondere zur Regulierung des Wachstums von Feldpflanzen im vegetativen Stadium, das 1 bis 60 Gew.-% 4-Chlor-m-cresol, p-Cresol, Hydrochinon, p-Nitrophenol, p-Chlorphenol, Phenol, Resorcin, Pyrogallol, 2,4-Dichlorphenol, 2,6-Dichlorphenol, Brenzkatechin, o-Butylphenol, 4-Methyl-7-hydroxy-(2H)benzpyran-2-on, Diacetylbrenzkatechin, Brenzkatechin-metallyl-ether, 2,2,4-Trimethyl-5-hydroxy-(2,H)-chromen, 2,2,4-Trimethyl-7-hydroxy-(2,H)-chromen oder eines Gemisches davon und gegebenenfalls wasserlösliche Salze oder Chelate von Magnesium, Mangan, Kupfer, Zink oder Molybdän oder wasserlösliche Derivate von Bor oder Schwefel oder Harnstoff oder ein Ammoniumsalz und 2-Chlorethylphosphonsäure, Salze oder Ester davon und feste oder flüssige Trägerstoffe und/oder Tenside umfaßt.

**Revendications**

1. Procédé pour la régulation de la croissance des végétaux des champs, qui consiste à traiter les végétaux au stade végétatif à une dose d'application de 0,3 à 4,0 kg/ha par un ou plusieurs composés choisis parmi le 4-chloro-m-crésol, le p-crésol, l'hydroquinone, le p-nitrophénol, le p-chlorophénol, le phénol, le résorcinol, le pyrogallol, le 2,4-dichlorophénol, le 2,6-dichlorophénol, le pyrocatéchol, l'o-butylphénol, la 4-méthyl-7-hydroxy-[2H]benzopyranne-2-one ou le diacétylpyrocatéchol, l'éther méthallylique du pyrocatéchol, le 2,2,4-triméthyl-5-hydroxy-[2H]-chromène, le 2,2,4-triméthyl-7-hydroxy-[2H]-chromène et facultativement, à une dose de 0,5 à 5,0 litres/ha, par un mélange contenant du magnésium, du manganèse, du cuivre, du zinc ou du molybdène à l'état de complexes ou de sels métalliques solubles dans l'eau, du bore ou du soufre à l'état de dérivés solubles dans l'eau ou de l'urée ou un sel d'ammonium à une concentration de 5 à 500 g/litre, et en outre par 0,5 à 3,0 kg/ha d'acide 2-chloréthylphosphonique, ses esters ou ses sels, simultanément ou au préalable.

2. Composition pour la régulation de la croissance des végétaux, de préférence pour la régulation de la croissance des végétaux des champs au stade végétatif, qui comprend 1 à 60% en poids de 4-chloro-m-crésol, de p-crésol, d'hydroquinone, de p-nitrophénol, de p-chlorophénol, de phénol, de résorcinol, de pyrogallol, de 2,4-dichlorophénol, de 2,6-dichlorophénol, de pyrocatéchol, d'o-butylphénol, de 4-méthyl-7-hydroxy-[2H]-benzopyranne-2-one, de diacétylpyrocatéchol, d'éther méthallylique du pyrocatéchol, de 2,2,4-triméthyl-7-hydroxy-[2H]-chromène, de 2,2,4-triméthyl-7-hydroxy-[2H]-chromène, ou d'un mélange de ces composés et facultativement de sels ou complexes, solubles dans l'eau, du magnésium, du manganèse, du cuivre, du zinc ou du molybdène ou de dérivés solubles dans l'eau du bore ou du soufre ou d'urée ou d'un sel d'ammonium et d'acide 2-chloréthylphosphonique, ses sels ou esters avec des véhicules solides ou liquides et/ou des agents tensio-actifs.